# EUROPÄISCHE PATENTANMELDUNG

(11) **EP 2 028 020 A1**
(43) Veröffentlichungstag der Anmeldung: **25.02.2009**
(21) Anmeldenummer: 08160368.0
(22) Anmeldetag: 15.07.2008
(51) Int. Cl.: B60C 1/00, C08K 5/29, C08K 5/36, C08L 9/00

(54) **Mit Silika gefüllte und silanhaltige Kautschukmischung mit reduzierter Ethanolemission**

(30) Priorität: 02.08.2007 DE 102007036430
(71) Anmelder: Continental Aktiengesellschaft, 30165 Hannover (DE)
(72) Erfinder: Lacayo-Pineda, Jorge, Dr., 31535, Neustadt (DE); Sostmann, Stefan, Dr., 30855, Langenhagen (DE)
(74) Vertreter: Finger, Karsten

(57) **Zusammenfassung**

Die Erfindung betrifft eine mit Silika gefüllte und silanhaltige Kautschukmischung mit einer oder mehreren Kautschukkomponente/n sowie mit Kautschuk verarbeitenden Zusatzstoffen, verbunden mit einer reduzierten Ethanolemission, insbesondere zur Herstellung von dynamisch belasteten Erzeugnissen, insbesondere wiederum von Reifen.

Die erfindungsgemäße Kautschukmischung zeichnet sich dadurch aus, dass die Kautschuk verarbeitenden Zusatzstoffe ein Isocyanat mit wenigstens zwei NCO-Gruppen als Prozesshilfsmittel sowie sonstige Zusatzstoffe umfassen, wobei wenigstens das Isocyanat einer noch unvulkanisierten Kautschukmischung, die zudem frei von vorvemetzten Kautschukpartikeln ist, beigemischt ist, wobei das Isocyanat ganz oder teilweise das Ethanol abfängt.

Eine vorteilhafte Kautschukmischung sowie besonders geeignete Isocyanate werden vorgestellt.

## Beschreibung

Die Erfindung betrifft eine mit Silika gefüllte und silanhaltige Kautschukmischung mit einer oder mehreren Kautschukkomponente/n sowie mit Kautschuk verarbeitenden Zusatzstoffen, verbunden mit einer reduzierten Ethanolemission, insbesondere zur Herstellung von dynamisch belasteten Erzeugnissen, insbesondere wiederum von Reifen.

An Reifen als besonderer Einsatzschwerpunkt einer gattungsgemäßen Kautschukmischung werden hohe Anforderungen an den Rollwiderstand und an die dynamische Belastbarkeit gestellt. Aus diesem Grunde wird dem Entwicklungsgebiet von Kautschukmischungen, insbesondere für die Laufstreifen von PKW- und Nutzfahrzeugreifen, ein breiter Raum eingeräumt. Hinsichtlich derartiger Kautschukmischungen wird insbesondere auf folgende Patentliteratur verwiesen:
DE 100 39 749 A1
DE 196 53 938 A1
DE 10 2005 044 997 A1
EP 0 736 399 B1
EP 0 812 879 B1
EP 0 893 281 B1
EP 0 921 150 B1
EP 1 270 657 B1
WO 01/36525 A1
WO 2004/072169 A1

Die oben genannte Erstschrift DE 100 39 749 A1 wird dabei im Rahmen der Beschreibung der erfindungsgemäßen Kautschukmischung noch näher vorgestellt.

Bei mit Silika gefüllten und silanhaltigen Kautschukmischungen gemäß dem oben genannten Stand der Technik entsteht Ethanol während des Mischprozesses und der Vulkanisation aufgrund der Silanierungsreaktion zur Anbindung des Silikas an die Polymermatrix. Dieses macht bekanntermaßen bei Reifen mit Silika gefüllten Lauffächenmischungen den größten Anteil an den Kohlenwasserstoffemissionen aus.

Es gibt bislang Ansätze zur Emissionsreduktion durch Anpassung des Herstellungsprozesses, und zwar durch längeres Mischen, insbesondere unter Einsatz mehrerer Mischstufen und Absaugen beim Mischen, oder alternativ durch den Einsatz von sogenannten Low-VOC-Silanen und/oder durch Reduktion des Silika-Anteils in den Kautschukmischungen. Der Nachteil derartiger Ansätze sind die hiermit verbundenen hohen Kosten. Eine Reduktion des Silika-Anteils entspricht ferner zumeist nicht den mischungstechnologischen Anforderungen.

Die Aufgabe der Erfindung besteht daher darin, eine Kautschukmischung bereit zu stellen, die zur deutlichen Reduktion der Ethanolemission und somit auch der Gesamtemission der Kohlenwasserstoffe beiträgt, und zwar im Rahmen einer einfachen Mischungstechnologie.

Gelöst wird diese Aufgabe dadurch, dass die Kautschuk verarbeitenden Zusatzstoffe ein Isocyanat mit wenigstens zwei NCO-Gruppen als Prozesshilfsmittel sowie sonstige Zusatzstoffe umfassen, wobei wenigstens das Isocyanat einer noch unvulkanisierten Kautschukmischung, die zudem frei von vorvernetzten Kautschukpartikeln ist, beigemischt ist, wobei das Isocyanat das Ethanol ganz oder teilweise abfängt.

Der Anteil des Isocyanats beträgt vorzugsweise 0,5 bis 5 phr. Hinsichtlich der optimalen Mengenanteile an Isocyanat wird an anderer Stelle, unter anderem im Rahmen einer Versuchsreihe, noch näher eingegangen.

In diesem Zusammenhang ist insbesondere folgende Zusammensetzung von Bedeutung:

| | |
|---|---|
| Kautschukkomponente/n | 100,0 phr |
| Silika | 10,0 bis 200,0 phr |
| Silan | 1,0 bis 10,0 phr |
| Isocyanat | 0,5 bis 5,0 phr |
| Zusatzstoffe | 5,0 bis 100,0 phr |

Im folgenden werden die wesentlichen Isocyanatgruppen und deren zweckmäßigen Verteter näher vorgestellt.
- Das Isocyanat weist eine ausschließlich aliphatische Gerüststruktur auf, und zwar bei einer Kohlenstoffanzahl 2 bis 12. Die wesentlichen Vertreter sind: Ethylendiisocyanat, 1,4-Tetramethylendiisocyanat, 1,6-Hexamethylendiisocyanat (1,6-HDI), 1,12-Dodecandiisocyanat, Cyclobutan-1,3-diisocyanat oder Isophorondiisocyanat (IPPD). Von besonderer Bedeutung ist dabei das 1,6-HDI. Weitere Vertreter können Cyclohexan-1,3-diisocyanat oder Cyclohexan-1,4-disocyanat oder beliebige Gemische dieser Stellungsisomere sein.
- Das Isocyanat weist eine ausschließlich aromatische Gerüststruktur auf. Hier sind die wesentlichen Vertreter: 1,3-Diisocyanato-benzol oder 1,4-Diisocyanato-benzol oder ein Gemisch dieser Stellungsisomere.
- Das Isocyanat weist eine aliphatisch-aromatische Gerüststruktur auf. Die diesbezüglichen wesentlichen Vertreter sind: Diphenylmethan-4,4'-diisocyanat (4,4'-MDI), Diphenylmethan-2,4'-diisocyanat (2,4'-MDI) oder Diphenylmethan-2,2'-diisocyanat (2,2'-MDI) oder beliebige Gemische dieser Stellungsisomere. Von besonderer Bedeutung ist dabei das 4,4'-MDI. Weitere Vertreter können 2,4-Diisocyanato-toluol (2,4-TDI) oder 2,6-Diisocyanato-toluol (2,6-TDI) oder beliebige Gemische dieser Stellungsisomere sowie ferner Tetramethylxylylendiisocyanat (TMXDI) oder p-Xylidendiisocyanat sein.

Ferner besteht die Möglichkeit, Gemische der oben genannten Isocyanatvertreter einzusetzen, beispielsweise 1,6-HDI und 4,4'-MDI.

Da die oben genannten Isocyanate teilweise leicht flüchtig sind und somit schwer verarbeitbar sowie zudem toxisch sind, kommen zumeist Polymere zum Einsatz, die aus aus zwei oder mehreren monomeren Isocyanaten mit wenigstens zwei NCO-Gruppen, insbesondere aus Diisocyanaten, gebildet sind, beispielsweise ein polymeres MDI mit dann der Nomenklatur PMDI, und zwar betreffend jedes Stellungsisomer. Innerhalb des polymeren Konzeptes sind insbesondere als Gerüststruktur das Trimer mit symmetrischer oder asymmetrischer Konstitution, das Biuret oder das Urethdion zu erwähnen.

Der Anteil des Isocyanats beträgt insbesondere 1 bis 5 phr, insbesondere wiederum 2 bis 5 phr. Hinsichtlich weiterer Details wird auf die Versuchsreihe verwiesen.

Isocyanate, insbesondere die der oben genannten Art, sind gegenüber Alkoholen, wobei hier das Ethanol im Rahmen der eingangs genannten Problemstellung von besonderer Relevanz ist, sehr reaktiv und reagieren mit diesen zu Urethanverbindungen. Diese Eigenschaft ermöglicht es, durch Einsmischen eines Isocyanats in die Kautschukmischung freies Ethanol abzufangen und somit die Ethanolemission zu reduzieren. Neben der guten Reaktivität sind insbesondere die oben erwähnten Isocyanate verträglich mit den übrigen Mischungsbestandteilen.

Wichtig ist, dass die unvulkanisierte Kautschukmischung keinerlei vorvernetzte Kautschukpartikel (Mikrogele) enthält. Die Isocyanate in dieser Kautschukmischung dienen dazu, das bei der Silanierungsreaktion gebildete Ethanol abzufangen. Das Isocyanat wirkt daher als Prozesshilfsmittel. Die Reaktionsprodukte des Isocyanats wirken dagegen insbesondere als Weichmacher.

Aus der eingangs genannten Offenlegungsschrift DE 100 39 749 A1 ist zwar bekannt, Isocyanate in Kautschukmischungen einzubringen, jedoch in einem anderen Zusammenhang und einer anderen Wirkung. Diese Patentliteratur offenbart den Einsatz von Isocyanaten als Vernetzer für Mikrogele in Vulkanisaten, insbesondere Isocyanate für die Anbindung vernetzter Kautschukpartikel (Mikrogele) in einer unvernetzten Kautschukmischung.

Im Zusammenhang mit der erfindungsgemäßen Kautschukmischung werden im folgenden noch einige zweckmäßige Mischungskonstellationen erwähnt:
- Als Kautschukkomponente werden insbesondere Naturkautschuk (NR), Butadien-Kautschuk (BR), Isopren-Kautschuk (IR), Styrol-Butadien-Kautschuk (SBR), Polychloropren (CR), Butylkautschuk (IIR), Brombutylkautschuk (BIIR) oder Chlorbutylkautschuk (CIIR) oder ein Verschnitt der vorgenannten Kautschuktypen, beispielsweise NR/BR-, NR/SBR- oder NR/SBR/BR-Verschnitte, eingesetzt.
- Der Anteil an Silika (Füllstoff) beträgt insbesondere 10 bis 100 phr, insbesondere wiederum 30 bis 100 phr.
- Die sonstigen Zusatzstoffe können neben dem als gesonderte Mischungskomponente genannten Silika einen weiteren Füllstoff (z.B. Ruß) und/oder ein Verarbeitungshilfsmittel (z.B. Alkyl- oder Phenolharze) und/oder ein Alterungschutzmittel (z.B PPD's) und oder Farbpigmente sowie gegebenenfalls weitere Zusatzstoffe umfassen. Auch wenn die Reaktionsprodukte des Isocyanats insbesondere als Weichmacher dienen, kann der Kautschukmischung ein weiterer Weichmacher (z.B. naphthenisches Öl) beigemischt sein.

Die hier genannten Zusatzstoffe werden insbesondere bereits zusammen mit dem Isocyanat in die noch unvulkanisierte Kautschukmischung eingemischt.

Auch ein Vernetzer (z.B. aus der Klasse der Chinone) für die spätere Vulkanisation kann der erfindungsgemäßen Kautschukmischung bereits beigefügt sein, jedoch vorzugsweise ohne Aktivator (z.B. peroxidische Aktivatoren). Vernetzer wie insbesondere das Vernetzersystem aus Vernetzer und Aktivator (Beschleuniger) werden hier jedoch zumeist erst kurz vor dem Vulkanisationsprozess zugegeben.

Der Anteil an Zusatzstoffen beträgt insbesondere 5 bis 80 phr, insbesondere 30 bis 80 phr.

Ansonsten wird hinsichtlich der Zusatzstoffe auf den allgemeinen Stand der Kautschukmischungstechnologie verwiesen.

Die Erfindung wird nun anhand von Ausführungsbeispielen, die in der folgenden tabellarischen Übersicht festgehalten sind, erläutert. Die Kautschukmischung ist dabei jeweils eine Laufflächenmischung eines Reifens. Die Referenzmischung enthält dabei kein Isocyanat, während die Versuche 1 und 2 jeweils ein Isocyanat enthalten, und zwar bei unterschiedlichen Mengenanteilen.

**Tabelle**

| **Kriterien** | **Referenz** | **Versuch 1** | **Versuch 2** |
|---|---|---|---|
| Kautschukkomponente/n | 100,0 phr | 100,0 phr | 100,0 phr |
| Silika | 86,0 phr | 86,0 phr | 86,0 phr |
| Silan | 8,0 phr | 8,0 phr | 8,0 phr |
| PMDI | | 1,3 phr | 2,7 phr |
| Zusatzstoffe | 50,0 phr | 50,0 phr | 50,0 phr |
| Relative HC-Emissionsmenge an Ethanol | 100 % | 66% | 33 % |

Auf der Basis von Naturkautschuk hatten die Referenzmischung sowie die beiden erfindungsgemäßen Kautschukmischungen (Versuche 1 und 2) mit Ausnahme des PMDI jeweils die gleiche Zusammensetzung.

Das jeweils eingesetzte gleiche PMDI bei den beiden erfindungsgemäßen Kautschukmischungen basiert insbesondere auf dem Diphenylmethan-4,4'-Diisocyanat und ist kommerziell unter dem Typ D410-01 der Firma Otto Bock Schaumsysteme, 37115 Duderstadt, verfügbar.

Die Versuchsreihe verdeutlicht, dass mit steigendem Anteil an PMDI die relative HC-Emissionsmenge an Ethanol sank, wobei im Bereich von 2 bis 5 phr bereits eine deutlich reduzierte Ethanolemission auftrat.

Weitere Versuchsreihen verdeutlichten, dass bei der Verwendung einer anderen Kautschukkomponente, beispielsweise BR als synthetischer Kautschuk, im Wesentlichen die gleichen Ergebnisse erzielt werden.

Die hier angegebenen Mengenangaben in phr (per hundred rubber) sind in der Kautschukmischungstechnologie übliche Bezugsgrößen.

## Patentansprüche

1. Mit Silika gefüllte und silanhaltige Kautschukmischung mit einer oder mehreren Kautschukkomponente/n sowie mit Kautschuk verarbeitenden Zusatzstoffen, verbunden mit einer reduzierten Ethanolemission, insbesondere zur Herstellung von dynamisch belasteten Erzeugnissen, insbesondere wiederum von Reifen, **dadurch gekennzeichnet, dass** die Kautschuk verarbeitenden Zusatzstoffe ein Isocyanat mit wenigstens zwei NCO-Gruppen als Prozesshilfsmittel sowie sonstige Zusatzstoffe umfassen, wobei wenigstens das Isocyanat einer noch unvulkanisierten Kautschukmischung, die zudem frei von vorvernetzten Kautschukpartikeln ist, beigemischt ist, wobei das Isocyanat das Ethanol ganz oder teilweise abfängt.

2. Kautschukmischung nach Anspruch 1, **dadurch gekennzeichnet, dass** der Anteil des Isocyanats 0,5 bis 5 phr beträgt.

3. Kautschukmischung nach Anspruch 1 oder 2, **gekennzeichnet durch** folgende Zusammensetzung:
| | |
|---|---|
| Kautschukkomponente/n | 100,0 phr |
| Silika | 10,0 bis 200,0 phr |
| Silan | 1,0 bis 10,0 phr |
| Isocyanat | 0,5 bis 5,0 phr |
| Sonstige Zusatzstoffe | 5,0 bis 100,0 phr |

4. Kautschukmischung nach einem der Ansprüche 1 bis 3, **dadurch gekennzeichnet, dass** das Isocyanat eine ausschließlich aliphatische Gerüststruktur aufweist.

5. Kautschukmischung nach Anspruch 4, **dadurch gekennzeichnet, dass** die Kohlenstoffanzahl 2 bis 12 beträgt.

6. Kautschukmischung nach Anspruch 4 oder 5, **dadurch gekennzeichnet, dass** Ethylendiisocyanat, 1,4-Tetramethylendiisocyanat, 1,6-Hexamethylendiisocyanat (1,6-HDI), 1,12-Dodecandiisocyanat, Cyclobutan-1,3-diisocyanat oder Isophorondiisocyanat (IPPD) zum Einsatz gelangen.

7. Kautschukmischung nach Anspruch 4 oder 5, **dadurch gekennzeichnet, dass** Cyclohexan-1,3-diiosocyanat oder Cyclohexan-1,4-diisocyanat oder beliebige Gemische dieser Stellungsisomere zum Einsatz gelangen.

8. Kautschukmischung nach einem der Ansprüche 1 bis 3, **dadurch gekennzeichnet, dass** das Isocyanat eine ausschließlich aromatische Gerüststruktur aufweist.

9. Kautschukmischung nach Anspruch 8, **dadurch gekennzeichnet, dass** 1,3-Diisocyanato-benzol oder 1,4-Diisocyanto-benzol oder ein Gemisch dieser Stellungsisomere zum Einsatz gelangen.

10. Kautschukmischung nach einem der Ansprüche 1 bis 3, **dadurch gekennzeichnet, dass** das Isocyanat eine aliphatisch-aromatische Gerüststruktur aufweist.

11. Kautschukmischung nach Anspruch 10, **dadurch gekennzeichnet, dass** Diphenylmethan-4,4'-diisocyanat (4,4'-MDI), Diphenylmethan-2,4'-diisocyanat (2,4'-MDI) oder Diphenylmethan-2,2'-diisocyanat (2,2'-MDI) oder beliebige Gemische dieser Stellungsisomere zum Einsatz gelangen.

12. Kautschukmischung nach Anspruch 10, **dadurch gekennzeichnet, dass** 2,4-Diisocyanato-toluol (2,4-TDI) oder 2,6 Diisocyanato-toluol (2,6-TDI) oder beliebige Gemische dieser Stellungsisomere zum Einsatz gelangen.

13. Kautschukmischung nach Anspruch 10, **dadurch gekennzeichnet, dass** Tetramethylxylylendiisocyanat (TMXDI) oder p-Xylidendiisocyanat zum Einsatz gelangen.

14. Kautschukmischung nach einem der Ansprüche 1 bis 13, **dadurch gekennzeichnet, dass** das zwei oder mehrere monomere Isocyanate mit wenigstens zwei NCO-Gruppen, insbesondere Diisocyanate, ein Polymer bilden.

15. Kautschukmischung nach Anspruch 14, **dadurch gekennzeichnet, das** das Isocyanat als Trimer, Biuret oder Urethdion vorliegt.

16. Kautschukmischung nach einem der Ansprüche 1 bis 15, **dadurch gekennzeichnet, dass** der Anteil an Isocyanat 1 bis 5 phr beträgt.

17. Kautschukmischung nach einem der Ansprüche 1 bis 16, **dadurch gekennzeichnet, dass** als Kautschukkomponente Naturkautschuk (NR), Butadien-Kautschuk (BR), Isopren-Kautschuk (IR), Styrol-Butadien-Kautschuk (SBR), Polychloropren (CR), Butylkautschuk (IIR), Brombutylkautschuk (BIIR) oder Chlorbutylkautschuk (CIIR) oder ein Verschnitt der vorgenannten Kautschuktypen eingesetzt werden.

18. Kautschukmischung nach einem der Ansprüche 1 bis 17, **dadurch gekennzeichnet, dass** der Anteil an Silika 10 bis 100 phr beträgt.

19. Kautschukmischung nach einem der Ansprüche 1 bis 18, **dadurch gekennzeichnet, dass** mit Ausnahme des Vernetzers und/oder des Aktivators sämtliche Zusatzstoffe der noch unvulkanisierten Kautschukmischung beigemischt sind.

20. Kautschukmischung nach einem der Ansprüche 1 bis 19, **dadurch gekennzeichnet, dass** der Anteil an Zusatzstoffen 5 bis 80 phr beträgt.
